(19) Europäisches Patentamt
European Patent Office
Office européen des brevets

(11) **EP 2 530 053 A1**

(12) **EUROPEAN PATENT APPLICATION**
published in accordance with Art. 153(4) EPC

(43) Date of publication:
**05.12.2012 Bulletin 2012/49**

(51) Int Cl.:
***C01B 33/18*** [(2006.01)]    ***C08K 9/06*** [(2006.01)]
***C08L 101/00*** [(2006.01)]

(21) Application number: **11736857.1**

(22) Date of filing: **14.01.2011**

(86) International application number:
**PCT/JP2011/050491**

(87) International publication number:
**WO 2011/093142 (04.08.2011 Gazette 2011/31)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.08.2010 JP 2010178811**
**26.01.2010 JP 2010014016**

(71) Applicant: **Sakai Chemical Industry Co., Ltd.**
**Sakai-shi, Osaka 590-8502 (JP)**

(72) Inventors:
• **MATSUKUBO, Takanori**
**Sakai-shi**
**Osaka 590-0985 (JP)**

• **NAKAGAWA, Ken-ichi**
**Sakai-shi**
**Osaka 590-0985 (JP)**
• **SUZUKI, Masahiro**
**Sakai-shi**
**Osaka 590-0985 (JP)**

(74) Representative: **Isarpatent**
**Patent- und Rechtsanwälte**
**Friedrichstrasse 31**
**80801 München (DE)**

(54) **SILICA PARTICLES, PROCESS FOR PRODUCTION OF SAME, AND RESIN COMPOSITION CONTAINING SAME**

(57)    The object of the present disclosure is to obtain silica particles having the sharp particle size distribution and low water-absorbing rate and being used suitably as a filler of a sealing resin composition, a method for producing it, and a resin composition containing the silica particles and a resin.

Silica particle having a water-absorbing rate of less than 1.0 % measured 500 hours after being kept at a temperature of 50°C and at a humidity of 90 %, and at a temperature of 85°C and at a humidity of 85 %, D90/D10 of 3 or less, a true specific gravity of 2.1 g/cm$^3$ or more, and an average particle diameter of 10 $\mu$m or less.

EP 2 530 053 A1

**Description**

TECHNICAL FIELD

The present disclosure relates to a silica particle, a method for producing thereof, and a resin composition containing it.

BACKGROUND OF THE DISCLOSURE

Recently, highly-pure silica came to be used for producing electronic materials and semiconductors with the rapid developments in electronic industry (see patent document 1, for example). Especially, a method using a sealing resin composition containing a resin and spherical silica which is being as filler is known. In such the use, silica particles having the sharp particle size distribution without coarse particles are needed with the size downing and the refinement of electronic parts.

For example, a method for producing spherical silica particles which comprises hydrolysis reaction of alkoxysilane in the presence of a basic catalyst, such as ammonia, and polycondensation of the obtained hydrolysate to produce spherical silica particles (see patent document 2, for example). A method for producing spherical silica having the sharp particle size distribution through the use of this sol-gel method has been investigated (Patent documents 3, 4, 5, and 6).

When the sealing resin composition becomes solidified, a problem that a resin film is swollen to generate cracks occurs because silanol groups existing at the surface of silica particle absorb moisture. As the moisture absorption increases, the sealing condition will be broken and the main body of semiconductor device will be exposed to the air. It tends to reduce the thickness of the sealing material to reduce the size and weight of the semiconductor device. However, in this case, the moisture may penetrate inside the sealing material trough the wall surface thereof. Even if the above-mentioned silica particle is used, such a problem cannot be solved.

To solve the problem, patent document 7 discloses a method to inhibit the crack occurrence at the resin part by using amorphous silica having high moisture absorbency. However, this method cannot obtain sufficient effect because the moisture is still remained in the sealing material part.

Patent document 8 discloses silica particles having fine pores of the certain size. However, the silica disclosed in patent document 8 is not high-density, because it has fine pores. Additionally, the amount of the silanol groups contained in the silica are controlled to surface treat by a silane coupling agent, and the silica are treated by a silane coupling agent. However, when the added amount of the silane coupling agent is low, the silanol groups which do not reacted with the silane coupling agent remains so that the remained silanol groups may reduce the humidity resistance. When the added amount of the silane coupling agent is large, the free silane coupling agents which are not used in the reaction may inhibit the adhesion to the resin and generate the change in color of the resin.

PRIOR PATENT DOCUMENT

PATENT DOCUMENT

[PATENT DOCUMENT 1] Japanese Kokai Publication Hei4-31311
[PATENT DOCUMENT 2] Japanese Kokai Publication Sho63-265806
[PATENT DOCUMENT 3] Japanese Kokai Publication 2003-277044
[PATENT DOCUMENT 4] Japanese Kokai Publication 2008-285406
[PATENT DOCUMENT 5] Japanese Kokai Publication 2003-277025
[PATENT DOCUMENT 6] Japanese Kokai Publication 2003-165718
[PATENT DOCUMENT 7] Japanese Kokai Publication Hei9-208809
[PATENT DOCUMENT 8] Japanese Kokai Publication 2002-338230

DISCLOSURE OF INVENTION

OBJECT OF THE DISCLOSURE

According to the above mentioned state of the art, the object of the present disclosure is to obtain silica particles having the sharp particle size distribution and low water-absorbing rate and being used suitably as a filler of a sealing resin composition, a method for producing it, and a resin composition containing the silica particle and a resin.

PROBLEM TO BE SOLVED BY THE INVENTION

The present disclosure relates to a silica particle having a water-absorbing rate of less than 1.0 % measured 500 hours after being kept at a temperature of 50°C and at a humidity of 90 %, and at a temperature of 85°C and at a humidity of 85 %, D90/D10 of 3 or less, a true specific gravity of 2.1 g/cm$^3$ or more, and an average particle diameter of 10 $\mu$m or less.
The silica particle is preferably surface treated by using a silane coupling agent and/or a silane compound.
The present disclosure relates to a method for producing the silica particle comprising a step (1) of obtaining silica particles by a hydrolysis reaction of tetraethoxysilane and/or a derivative thereof, and a step (2) of calcinating the obtained silica particles in said step (1) at 900 to 1050°C.
The calcinating is preferably proceeded at the calcinating temperature of 950 to 1050°C.
The method for producing the silica particle preferably comprises surface treating with use of a silane coupling agent and/or a silane compound.
The surface treating is preferably proceeded by means of a spray drying.
The present disclosure relates to a resin composition containing the silica particle and a resin.

EFFECT OF THE INVENTION

The silica particle of the present disclosure has the sharp particle size distribution (that is, the amount of coarse particles having extremely-large particle diameter is little) and remarkable lower water-absorbing rate than ordinary silica particles at a wide range of temperatures over time. The silica particles can obtain excellent filling property, humidity resistance, and dimension stability which are needed for use of a sealing filler of a semiconductor and so on.

DETAILED DESCRIPTION OF PREFERRED EMBODIMENTS

The present disclosure is described in more detail below. The silica particle of the present disclosure has a water-absorbing rate of less than 1.0% measured 500 hours after being kept at a temperature of 50°C and at a humidity of 90 %, and at a temperature of 85°C and at a humidity of 85 %. The above-mentioned silica particle has not been known and had been produced by the inventors for the first time. The water-absorbing rate of ordinary silica particles are about 2 to 5 % under the above-mentioned conditions. So, it may be said that the water-absorbing rate of the silica particle of the present disclosure is exceptionally-low. The water-absorbing rate is preferably less than 0.5%, and the lower limit is not particularly limited but preferably 0.01 % or more. In the present disclosure, the water-absorbing rate can be measured by the following method. First, silica powder 10 g is weighed in a 300 cc-beaker, and weighed before absorbing the moisture. The beaker containing the silica powder is put in a thermo-hygrostat and after another 500 hours, the silica powder absorbing the moisture is weighed. The calculation method of the water-absorbing rate is showed by the formula (1).

$$\text{Water-absorbing rate (\%)} = (\text{weight after absorbing the moisture} - \text{weight before absorbing the moisture}) / (\text{weight before absorbing the moisture}) \times 100 \quad (1)$$

For example, the temperature and the humidity when the water-absorbing rate is measured may be controlled by using a thermo-hygrostat (LH-113 manufactured by ESPEC CORP.).
The silica particle of the present disclosure has D90/D10 of 3 or less. When the particle size distribution of the powder is measured, D10 and D90 correspond to the point where the cumulative weight from the small-particle-diameter side reaches 10% and 90% in the cumulative particle size distribution. The silica particle of the present disclosure has the sharp particle size distribution because the D90/D10 thereof is 3 or less. It is preferred that the particles have the sharp particle size distribution, because the control of the filling ratio becomes easier. The D90/D10 is preferably 2.9 or less. D10 and D90 are values obtained by measuring the particle size distribution. In the present disclosure, the particle size distribution is measured by using a laser diffraction particle size analyzer (Microtrac MT 3300 EX manufactured by NIKKISO CO., LTD.).
The silica particle of the present disclosure has the true specific gravity of 2.1 g/cm$^3$ or more. The true specific gravity becomes smaller with the increasing of cracks and fine pores at the surface and inside of the particle. The silica particle of the present disclosure has the true specific gravity larger than ordinary silica particles, so the number of fine pores therein is small and the amount of Si-OH groups contained at the surface is small. The Si-OH group is highly hydrophilic functional group; the hydrophilic property becomes less with the reduction of the amount of the Si-OH groups so that the water-absorbing rate becomes less. The silica having the true specific gravity of 2.1 g/cm$^3$ or more has a low number of fine pores and a high-density netlike constitution is formed therein, so the amount of Si-OH groups is little. Therefore, hydrophilic property becomes less to reduce the water-absorbing rate of the silica particle.

The true specific gravity is preferably 2.10 g/cm$^3$ or more, more preferably 2.15 g/cm$^3$ or more. The upper limit of the true specific gravity is not particularly limited but is preferably 2.20 g/cm$^3$. When the true specific gravity is less than 2.1 g/cm$^3$, the water-absorbing rate may not be reduced sufficiently. The true specific gravity can be measured by using Beckmann air comparison pycnometer.

The silica particle of the present disclosure has an average particle diameter of 10 μm or less. It is not preferred to use particle having the average particle diameter of more than 10 μm as a sealing material, because the thickness of a sealing material cannot be reduced so that the size downing and the weight saving of a semiconductor device become difficult. The average particle diameter is preferably 8 μm or less, more preferably 5 μm or less. The lower limit of the average particle diameter is not particularly limited but preferably 0.01 μm, and more preferably 0.03 μm. In the present disclosure, the average particle diameter of the silica particle can be measured by using a laser diffraction particle size analyzer.

A particle shape of the silica particle of the present disclosure is not particularly limited but includes needle shape, bar-like shape, plate-like shape, spherical shape and the like. Preferably, the particle shape is nearly spherical shape. In addition, the particle shape can be observed by Scanning Electron Microscope (JSM-7000f manufactured by JEOL Ltd.).

The silica particle is preferably surface treated by using a silane coupling agent and/or a silane compound. By this surface treating, the compatibility with a resin can be increased, and the resin physicality and the molding processability when the particle is composed in a resin can be improved.

The silane coupling agent and/or silane compound are not particularly limited but a compound expressed by the general formula (I) is preferably used;

$$Xm\text{-}Si\text{-}(OR)_{4\text{-}m} \qquad (I)$$

(in the formula, X expresses an organic group having a reactive organic functional group, R expresses an alkyl group having 1 to 5 carbon atoms, and m expresses integer of 0 to 3) The reactive organic functional group in the organic group includes, for example, vinyl group, epoxy group, amino group, mercapto group, chlorine atom, acryloyloxy group, methacryloyloxy group and so on. Therefore, the organic group X having such a reactive organic functional group includes, for example, vinyl group, 2-(3,4-epoxy cyclohexyl)ethyl group, γ-glycidoxy propyl group, γ-aminopropyl group, N-2-(aminoethyl)-3-aminopropyl group, N-phenyl-3-aminopropyl group, γ-mercaptopropyl group, 3-chloropropyl group, 3-methacryloxy propyl group and so on. The alkyl group R may include, for example, methyl group, ethyl group, propyl group, butyl group, pentyl group, methoxyethoxyl group, and so on.

Therefore, in the present disclosure, a preferred specific example includes, for example, tetraethoxysilane, vinyltriethoxysilane, vinyl tris(2-methoxyethoxy)silane, γ-methacryloxy propyl trimethoxysilane, γ- aminopropyl trimethoxysilane, 2-(3,4-epoxycyclohexyl)ethyl trimethoxysilane, γ-glicydoxy propyl trimethoxysilane, γ-mercapto propyl trimethoxysilane, 3-chloropropyl trimethoxysilane and so on.

A method for producing the silica particle is not particularly limited but includes, for example, a method comprising a step (1) of obtaining silica particles by a hydrolysis reaction of tetraethoxysilane and/or a derivative thereof, and a step (2) of calcinating the obtained silica particle in said step (1) at 900 to 1050°C. The method for producing is one aspect of the present disclosure.

The method for producing a silica particle of the present disclosure comprises calcinating the silica particle obtained by a hydrolysis reaction with use of tetraethoxysilane and/or a derivative thereof at the calcinating temperature of 900 to 1050°C. Though the reason is unknown, silica particles which have a sharper particle size distribution than the case when the other silane compound (for example, tetramethoxysilane and so on) is used as a material can be obtained when the tetraethoxysilane and/or a derivative thereof is used as a material.

The tetraethoxysilane derivative is not particularly limited but includes, for example, a low condensate obtained by partial hydrolysis of tetraethoxysilane. Other silane compound may be used unless the compound has little effect on the particle size distribution.

The hydrolysis may be done under the condition of a hydrolysis reaction used in the ordinary sol-gel method. That is, it can be obtained by hydrolysis and condensation of the tetraethoxysilane and/or derivative thereof as a material in an organic solvent containing water.

The organic solvent is not particularly limited but includes, for example, alcohols such as methanol, ethanol, isopropanol, n-butanol, t-butanol, pentanol, ethylene glycol, propyrene glycol, and 1,4-butanediol, ketones such as acetone and methyl ethyl ketone, esters such as ethyl acetate, paraffins such as isooctane, and cyclohexane, ethers such as dioxane, and diethyl ether, and aromatic compounds such as benzene, and toluene. The organic solvent may be used singly or two or more of them may be used in admixture. In the present disclosure, it is preferred to use alcohols, more preferred to use methanol, ethanol, and isopropanol.

An amount of the organic solvent to be used is not particularly limited but preferably 0.1 to 50 mol per 1 mol of the used material. If less than 0.1 mol, the compatibility with the materials may be reduced. If more than 50 mol, it is not preferred because the production efficiency may be extremely decreased. The amount of water is not particularly limited but preferably 0.5 to 15 mol per 1 mol of the used materials. The amount of water to be used has an effect on the particle diameter of the formed silica fine particles. With the increase in the amount of water relatively, the particle diameter of the silica fine particle may be lessened. With the decrease in the amount of water relatively, the particle diameter of the silica fine particles may be enlarged. Therefore, the particle diameter of the silica fine particles may be adjusted by controlling the ratio of water and the organic solvent.

In addition, a catalyst such as ammonia, urea, ethanolamine, and tetramethylammonium hydroxide may be added in the organic solvent. When the catalyst is used, the amount is not particularly limited but preferably 0.05 to 10 mol per 1 mol of the used materials.

The step (1) is more preferably done in a solution of homogeneous solvent to obtain the high-density silica particle of the present disclosure. That is, a reaction in a mixed solution of a solvent which can be mixed in all proportions with water and can dissolve a silane compound being the material and water, is preferred. The reaction in the mixed solution of the solvent and water is preferred because it is easy to obtain the high-density silica. The solvent which can dissolve the silane compound being the material may include alcohols such as ethanol, methanol, isopropanol, n-butanol, t-butanol, pentanol, ethyleneglycol, propyrene glycol, and 1,4-butanediol.

The hydrolysis and condensation of the materials in an organic solvent containing water may be done by adding the materials in the organic solvent containing water and stirring at 0 to 100°C, preferably 0 to 70°C. In this way, a slurry containing spherical silica may be obtained by stirring the materials in the organic solvent containing water, hydrolysis and condensation.

Usually, silica particle is calcinated at low temperature of about 200 to 700°C. This is due to the feature that the silanol groups existing at the silica surface are connected to form aggregates by calcinating at high temperature. The present disclosure can reduce the silanol group amount and fine pores to obtain silica particles having the low water-absorbing rate, by setting the calcinating temperature which is usually about 200 to 700°C at the high temperature. The present disclosure found that the effect of the invention can be achieved efficiency by using the tetraethoxysilane and/or the derivative thereof as a material.

The calcinating temperature is 900 to 1050°C. If less than 900°C, the water-absorbing rate cannot be reduced sufficiently. If more than 1050°C, it becomes hard to obtain silica particles having the sharp particle size distribution because the fusion between the particles occurs to form an aggregate. The calcinating temperature is more preferably 950 to 1050°C. The calcinating is preferably done for 10 min. to 10 hours. If the calcinating time is less than 10 min., it is not preferred because the calcinating may be insufficient.

The silica particle obtained according to the above-mentioned method has a sharp particle size distribution but the particles may be pulverized or classified using a sieve if sharper particle size distribution is required or in order to remove a few coarse particles contained therein. A method for pulverization is not particularly limited but includes, for example, a method using an atomizer and so on. The classification using a sieve includes wet classification and dry classification.

The method for producing a silica particle of the present disclosure preferably comprises surface treating with use of a silane coupling agent and/or a silane compound. By doing the surface treatment, the water-absorbing rate can be reduced because the silanol group amount existing at the surface of the silica particle can be reduced. The silane coupling agent and/or the silane compound are not particularly limited but include the above-mentioned compounds.

A method for the surface treatment is not particularly limited but ordinary known methods may be used. Among them, a spray drying is preferred. The silica particle of the present disclosure has low reactivity with a silane coupling agent because the silanol group amount existing at the surface thereof is reduced. However, the silane coupling agent can be applied suitably by surface treating through use of a spray drying and baking (drying step). In a method of the spray drying, a spray drier is used and a charge amount is controlled so that the exit temperature is set at 90 to 100°C.

The silica particle may be used as an additive of a resin. A resin composition containing the silica particle and a resin is one aspect of the present disclosure. In this case, a resin to be used is not particularly limited but may be a thermoplastic resin or a thermosetting resin. There may be mentioned, for example, epoxy resins, phenol resins, polyphenylene sulfide resin (PPS), polyester resins, polyamides, polyimides, polystyrenes, polyethylenes, polypropylenes, polyvinyl chloride, polyvinylidene chloride, fluorine resins, polymethylmethacrylate, ethylene/ethyl acetate copolymer resin (EEA), polycarbonate, polyurethanes, polyacetals, polyphenylene ethers, polyether imides, acrylonitrile butadiene styrene copolymer resin (ABS), liquid crystal resins (LCP), silicone resins, acrylic resins and so on. Two or more of the resins may be used. Especially, a resin composition containing the silica particle and the epoxy resin may be used suitably as a sealing composition.

The resin composition may be a composition containing the silica particle and a photo-curable resin. The photo-curable resin may include a compound containing two or more acrylate groups or methacrylate groups. As this compound, specifically, there may be mentioned EO-modified bisphenol A di (meth) acrylate, trimethylolpropane tri(meth)acrylate, pentaerythritol tri(meth)acrylate, pentaerythritol tetra(meth)acrylate, dipentaerythritol hexa(meth)acrylate, dipentaerythritol tetra(meth)acrylate, tricyclodecanedimethanol (meth)acrylate, hexanediol di(meth)acrylate, dipentaerythritol hydroxypenta(meth)acrylate, pentaerythritol ethoxytetra(meth)acrylate, tris(acryloxy ethyl) isocyanurate, trimethylolpropane benzoate(meth)acrylate, neopentyl glycol di(meth)acrylate, polypropyleneglycol di(meth)acrylate, polyethylene glycol di (meth)acrylate, imido(meth)acrylate, amino(meth)acrylate, polyester(meth)acrylate, ester(meth)acrylate, urethane (meth)acrylate, epoxy(meth)acrylate, isocyanuric acid-modified tri(meth)acrylate, and so on. In the disclosure, (meth) acrylate means methacrylate and acrylate.

An amount of the silica particle to be added in the resin composition is not particularly limited but may be controlled according to need. Specifically, the amount is preferably 10 to 950 weight parts, more preferably 100 to 900 weight parts relative to 100 weight parts of the resin , when the resin composition is used as a sealing resin composition.

In the resin composition, two kinds of the silica particles having the different particle diameters may be used. More specifically, coarse particles having large particle diameter and fine silica particles having the particle diameter of 1/3 to 1/40 of the silica particles having large particle diameter may be used in combination. The mixing ratio between the coarse particles and fine particles is preferably the coarse particles 90 to 40%: the fine particles 10 to 60% in volume. More preferably, it is within the range of the coarse particles 80 to 60%: the fine particles 20 to 40%. It is preferred to set the mixing ratio between the coarse particles and the fine particles within the above-mentioned range because the filling constitution becomes nearly closest filling to increase the filling ratio of particles.

The resin composition of the present disclosure is superior in the humidity resistance, processability, dimensional stability, and so on, because the silica particles to be used as the filling material have the above-mentioned performances. The use of the resin composition is not particularly limited but includes, for example, a sealing resin composition for a semiconductor and an electronic component, an adhesive agent, a toner external additive and so on. When used in such the use, other additives than the silica particle and the resin may be added according to use.

The silica particle of the present disclosure may be used for a liquid sealing material, a liquid crystal sealing agent, a seal agent, a polyimide film, a sputtering target, a CMP slurry (abrading agent), a dental material, a food additive, and cosmetics.

BRIEF DESCRIPTION OF THE DRAWINGS

FIG. 1 shows a correlative relationship between the true specific gravity and the water-absorbing rate of the silica particle.
FIG. 2 shows a result of the dynamic viscoelasticity of the silica particles obtained in Examples 25, 26, and 27.

EXAMPLE

Hereinafter, the present disclosure will be described in more detail by way of examples, but the present disclosure is not limited to these examples. In examples, "%" means "weight %", unless otherwise specified.

In the following, the particle size distribution of the obtained silica particles were measured by using a laser diffraction particle size analyzer (Microtrac MT 3300 EX manufactured by NIKKISO CO., LTD.). The particles were observed by using Scanning Electron Microscope (JSM-7000f manufactured by JEOL, Ltd.). The average particle diameter was measured by using a laser diffraction particle size analyzer (Microtrac MT 3300 EX manufactured by NIKKISO CO., LTD.). The true specific gravity was measured by using Beckmann air comparison pycnometer 930 type.

(Example 1)

A 2L-reaction vessel equipped with an agitator was set in a constant-temperature bath, ethanol 205 g, water 246 g, and 25 wt% ammonia water 232 g were put into the vessel. The mixture was mixed by using the agitator with heating to 50°C. Next, with stirring the mixture, tetraethoxysilane 267 g was added continuously for 200 min. After adding, the solution was filtered to obtain silica particles. Then, the particles were dried at 130°C one night, and calcinated at 1000°C. The calcinating condition was that the temperature was raised to 1000°C for 10 hours, kept for 5 hours, and then lowered. The obtained silica particle was spherical, the average particle diameter was 0.05 μm, and the D90/D10 value was 1.7.

(Example 2)

A 2L-reaction vessel equipped with an agitator was set in a constant-temperature bath, ethanol 102 g, water 184 g, and 25 wt% ammonia water 204 g were put into the vessel. The mixture was mixed by using the agitator with heating to 33°C. Next, with stirring the mixture, tetraethoxysilane 421 g was added continuously for 45 min. After adding, the solution was filtered to obtain silica particles. Then, the particles were dried at 130°C one night, and calcinated at 1000°C. The calcinating condition was that the temperature was raised to 1000°C for 10 hours, kept for 5 hours, and then lowered. The obtained silica particle was spherical, the average particle diameter was 0.1 μm, and the D90/D10 value was 1.9.

(Example 3)

A 2L-reaction vessel equipped with an agitator was set in a constant-temperature bath, ethanol 85.5 g, water 184 g, and 25 wt% ammonia water 204 g were put into the vessel. The mixture was mixed by using the agitator with heating to 25°C. Next, with stirring the mixture, tetraethoxysilane 421 g was added continuously for 45 min. After adding, the solution was filtered to obtain silica particles. Then, the particles were dried at 130°C one night, and calcinated at 1000°C. The calcinating condition was that the temperature was raised to 1000°C for 10 hours, kept for 5 hours, and then lowered. The obtained silica particle was spherical, the average particle diameter was 0.4 μm, and the D90/D10 value was 1.8.

(Example 4)

A 2L-reaction vessel equipped with an agitator was set in a constant-temperature bath, ethanol 171 g, water 184 g, and 25 wt% ammonia water 204 g were put into the vessel. The mixture was mixed by using the agitator with heating to 25°C. Next, with stirring the mixture, tetraethoxysilane 421 g was added continuously for 45 min. After adding, the solution was filtered to obtain silica particles. Then, the particles were dried at 130°C one night, and calcinated at 1000°C. The calcinating condition was that the temperature was raised to 1000°C for 10 hours, kept for 5 hours, and then lowered. The obtained silica particle was spherical, the average particle diameter was 0.7 μm, and the D90/D10 value was 1.7.

(Example 5)

A 2L-reaction vessel equipped with an agitator was set in a constant-temperature bath, ethanol 342 g, water 184 g, and 25 wt% ammonia water 204 g were put into the vessel. The mixture was mixed by using the agitator with heating to 25°C. Next, with stirring the mixture, tetraethoxysilane 421 g was added continuously for 45 min. After adding, the solution was filtered to obtain silica particles. Then, the particles were dried at 130°C one night, and calcinated at 1000°C. The calcinating condition was that the temperature was raised to 1000°C for 10 hours, kept for 5 hours, and then lowered. The obtained silica particle was spherical, the average particle diameter was 1.5 μm, and the D90/D10 value was 1.7.

(Examples 6 to 10)

The silica particles were obtained by following the same procedure as that of Examples 1 to 5 except that the calcinating temperature was changed to 900°C. The obtained silica particles were spherical and the average particle diameters thereof were 0.05, 0.1, 0.4, 0.7 and 1.5 μm, respectively. The D90/D10 values thereof were 1.7, 1.9, 1.8, 1.7, and 1.7, respectively.

(Examples 11 to 15)

The silica particles were obtained by following the same procedure as that of Examples 1 to 5 except that the calcinating temperature was changed to 950°C. The obtained silica particles were spherical and the average particle diameters thereof were 0.05, 0.1, 0.4, 0.7 and 1.5 μm, respectively. The D90/D10 values thereof were 1.7, 1.9, 1.8, 1.7, and 1.7, respectively.

(Examples 16 to 20)

The silica particles were obtained by following the same procedure as that of Examples 1 to 5 except that the calcinating temperature was changed to 1050°C. The obtained silica particles were spherical and the average particle diameters thereof were 0.05, 0.1, 0.4, 0.7 and 1.5 μm, respectively. The D90/D10 values thereof were 1.7, 1.9, 1.8, 1.7, and 1.7, respectively.

(Comparative Examples 1 to 5)

The silica particles were obtained by following the same procedure as that of Examples 1 to 5 except that the calcinating temperature was changed to 700°C. The obtained silica particles were spherical and the average particle diameters thereof were 0.05, 0.1, 0.4, 0.7 and 1.5 μm, respectively. The D90/D10 values thereof were 1.7, 1.9, 1.8, 1.7, and 1.7, respectively.

(Comparative Examples 6 to 10)

The silica particles were obtained by following the same procedure as that of Examples 1 to 5 except that the calcinating temperature was changed to 750°C. The obtained silica particles were spherical and the average particle diameters thereof were 0.05, 0.1, 0.4, 0.7 and 1.5 μm, respectively. The D90/D10 values thereof were 1.7, 1.9, 1.8, 1.7, and 1.7, respectively.

(Comparative Examples 11 to 15)

The silica particles were obtained by following the same procedure as that of Examples 1 to 5 except that the calcinating temperature was changed to 800°C. The obtained silica particles were spherical and the average particle diameters thereof were 0.05, 0.1, 0.4, 0.7 and 1.5 μm, respectively. The D90/D10 values thereof were 1.7, 1.9, 1.8, 1.7, and 1.7, respectively.

(Comparative Examples 16 to 20)

The silica particles were obtained by following the same procedure as that of Examples 1 to 5 except that the calcinating temperature was changed to 850°C. The obtained silica particles were spherical and the average particle diameters thereof were 0.05, 0.1, 0.4, 0.7 and 1.5 μm, respectively. The D90/D10 values thereof were 1.7, 1.9, 1.8, 1.7, and 1.7, respectively.

(Water-absorbing rate 1)

The water-absorbing rate was measured after the obtained silica particles 10 g was put in a 300 mL-beaker and kept in a thermo-hygrostat (LH-113 manufactured by ESPEC corp.) at 50°C temperature and 90% humidity for 500 hours.

(Water-absorbing rate 2)

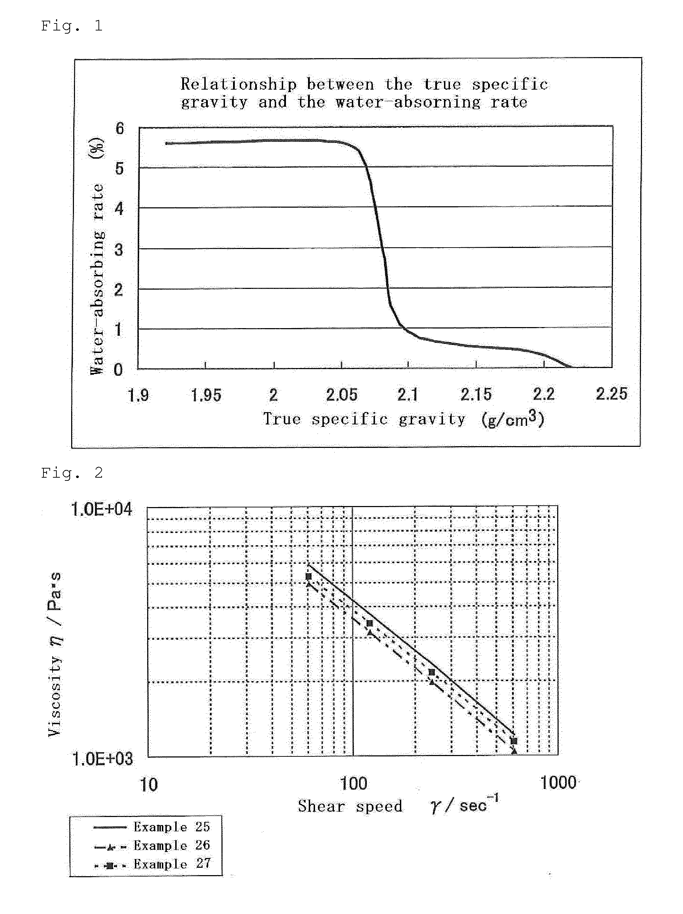

The water-absorbing rate was measured by following the same procedure as that of the water-absorbing rate 1 except that the condition was changed to 85°C temperature and 85% humidity.
The specific gravity of the silica particles obtained by calcinating at the several calcinating temperature was measured by using Beckmann air comparison pycnometer 930 type. The true specific gravity of the obtained silica particles were shown in Table 1. The water-absorbing rate of the each particle at 50°C temperature and 90% humidity was shown in table 2. The water-absorbing rate of the each particle at 85°C temperature and 85% humidity was shown in table 3. The relationship between the true specific gravity and the water-absorbing rate of the particle having the average particle diameter of 0.4 μm was shown in Fig. 1. According to tables 2 and 3, it was founded that the silica particles of the present disclosure had low water-absorbing rate.
[Table 1]

|  | True specific gravity (g/cm$^3$) | | | | |
|  | Particle diameter 0.05 μ | Particle diameter 0.1 μ | Particle diameter 0.4 μ | Particle diameter 0.7 μ | Particle diameter 1.5 μ |
|---|---|---|---|---|---|
| 700°C | 2.16 | 2.14 | 1.92 | 1.96 | 1.95 |
| 750°C | 2.20 | 2.18 | 2.05 | 2.05 | 2.03 |
| 800°C | 2.21 | 2.20 | 2.07 | 2.06 | 2.05 |
| 850°C | 2.27 | 2.22 | 2.08 | 2.08 | 2.08 |

(continued)

| | True specific gravity (g/cm$^3$) | | | | |
| --- | --- | --- | --- | --- | --- |
| | Particle diameter 0.05 $\mu$ | Particle diameter 0.1 $\mu$ | Particle diameter 0.4 $\mu$ | Particle diameter 0.7 $\mu$ | Particle diameter 1.5 $\mu$ |
| 800°C | 2.28 | 2.25 | 2.10 | 2.11 | 2.11 |
| 950°C | 2.30 | 2.28 | 2.19 | 2.12 | 2.11 |
| 1000°C | 2.32 | 2.31 | 2.22 | 2.13 | 2.12 |
| 1050°C | 2.32 | 2.32 | 2.23 | 2.15 | 2.14 |

[Table 2]

| | Water -absorbing rate (%) | | | | | |
| --- | --- | --- | --- | --- | --- | --- |
| Calcinating temperature (°C) | 700 | 800 | 900 | 950 | 1000 | 1050 |
| 0.05 $\mu$m | 4.5 | 3.2 | 0.5 | 0.1 | 0 | 0 |
| 0.1 $\mu$m | 5.5 | 4.5 | 0.8 | 0.4 | 0 | 0 |
| 0.4 $\mu$m | 5.5 | 4.7 | 0.9 | 0.3 | 0 | 0 |
| 0.7 $\mu$m | 5.0 | 4.4 | 0.9 | 0.1 | 0 | 0 |
| 1.5 $\mu$m | 4.9 | 4.3 | 0.9 | 0.1 | 0 | 0 |

[Table 3]

| | Water-absorbing rate (%) | | | | | |
| --- | --- | --- | --- | --- | --- | --- |
| Calcinating temperature (°C) | 700 | 800 | 900 | 950 | 1000 | 1050 |
| 0.05 $\mu$m | 1.3 | 0.8 | 0.1 | 0 | 0 | 0 |
| 0.1 $\mu$m | 2.0 | 1.5 | 0.9 | 0.5 | 0 | 0 |
| 0.4 $\mu$m | 2.2 | 1.4 | 0.9 | 0.5 | 0 | 0 |
| 0.7 $\mu$m | 2.1 | 1.4 | 0.9 | 0.5 | 0 | 0 |
| 1.5 $\mu$m | 2.1 | 1.5 | 0.9 | 0.5 | 0 | 0 |

1 From the results, it was shown that there is a correlation between the true specific gravity and the water-absorbing rate. Concerning the silica particle having the average particle diameter of 0. 4 $\mu$m, the silica particle having the true specific gravity of 2.1 g/cm$^3$ or more had the water-absorbing rate less than 1.0%, so the silica particle which is superior in the humidity resistance could be achieved.

(Example 21)

Silica powder of Example 2 was re-pulped at 400 g/L, and wet pulverized by using a sand mill. After then, a coupling agent KBM-403 (manufactured by Shin-Etsu Chemical Co., Ltd.) which is hydrolyzed at room temperature in advance was added to the slurry, and stirred at 60°C for two hours. This slurry was spray-dried by using L-12 type spray drier (manufactured by Ohkawara Kakohki Co., LTD.). This time, the charge amount was controlled so that the exit temperature was 90 to 100°C. The obtained silica powder was dried at 130°C in a drying machine to bind KBM-403 to the silica particle.

(Example 22)

Silica powder of Example 4 was re-pulped at 400 g/L, and wet pulverized by using a sand mill. After then, a coupling agent KBM-403 (manufactured by Shin-Etsu Chemical Co., Ltd.) which is hydrolyzed at room temperature in advance was added to the slurry, and stirred at 60°C for two hours. This slurry was spray-dried by using L-12 type spray drier (manufactured by Ohkawara Kakohki Co., LTD.). This time, the charge amount was controlled so that the exit temperature was 90 to 100°C. The obtained silica powder was dried at 130°C in a drying machine to bind KBM-403 to the silica particle.

(Example 23)

The silica particle was surface treated by following the same procedure as that of Example 21 except that the silane coupling agent was changed to hexamethyldisilazane being alkoxysilane (HMDS) (manufactured by Shin-Etsu Chemical Co., Ltd.).

(Example 24)

The silica particle was surface treated by following the same procedure as that of Example 22 except that the silane coupling agent was changed to hexamethyldisilazane being alkoxysilane (HMDS) (manufactured by Shin-Etsu Chemical Co., Ltd.).

(Effect example of surface treatment)

(Example 25)

Silica particle of example 2 having the particle diameter of 0.1 $\mu$m and silica particle of example 4 having the particle diameter of 0.7 $\mu$m were mixed in the ratio of 3 : 7 (weight ratio), and a resin composition was prepared by mixing this mixture 232 weight parts relative to EEA resin 100 weight parts. The resin composition obtained by this way was molded to a test piece of 2 square mm.

(Example 26)

Silica particle of example 21 having the particle diameter of 0.1 $\mu$m and silica particle of example 22 having the particle diameter of 0.7 $\mu$m were mixed in the ratio of 3 : 7 (weight ratio), and a resin composition was prepared by mixing this mixture 232 weight parts relative to EEA resin 100 weight parts. The resin composition obtained by this way was molded to a test piece of 2 square mm.

(Example 27)

Silica particle of example 23 having the particle diameter of 0.1 $\mu$m and silica particle of example 24 having the particle diameter of 0.7 $\mu$m were mixed in the ratio of 3 : 7 (weight ratio), and a resin composition was prepared by mixing this mixture 232 weight parts relative to EEA resin 100 weight parts. The resin composition obtained by this way was molded to a test piece of 2 square mm.

(Effect of surface treatment)

The dynamic viscoelasticity of the test pieces of Examples 25 to 27 were measured (measuring condition was 190°C, a capillary to be used has the capillary diameter of 2.0 mm) by using a capillary rheometer (type 1D, manufactured by Toyo Seiki Seisaku-Sho, Ltd.). The method for measuring it was according to JIS K 7199.
The result was shown in Fig. 2. The viscosity could be reduced by surface treating with use of a silane coupling agent and a silane compound to improve the molding processability.

INDUSTRIAL APPLICABILITY

The present disclosure can obtain silica particle having the sharp particle size distribution and lower water-absorbing rate than ordinary particles. Such the silica particle can be used suitably for the fields such as a sealing resin composition of electronic components, an adhesive agent, and a toner external additive.
The silica particle of the present disclosure can be used for a liquid sealing material, a liquid crystal sealing agent, a seal agent, a polyimide film, a sputtering target, a CMP slurry (abrading agent), a dental material, a food additive, and cosmetics.

**Claims**

1. Silica particle having a water-absorbing rate of less than 1.0 % measured 500 hours after being kept at a temperature of 50°C and at a humidity of 90 %, and at a temperature of 85°C and at a humidity of 85 %, D90/D10 of 3 or less, a true specific gravity of 2.1 g/cm$^3$ or more, and an average particle diameter of 10 $\mu$m or less.

2. The silica particle according to claim 1, which is surface treated by using a silane coupling agent and/or a silane compound.

3. A method for producing the silica particle according to claim 1, comprising a step (1) of obtaining silica particles by a hydrolysis reaction of tetraethoxysilane and/or a derivative thereof, and a step (2) of calcinating the obtained silica particles in said step (1) at 900 to 1050°C.

4. The method for producing the silica particle according to claim 3, wherein the calcinating is proceeded at the calcinating temperature of 950 to 1050°C.

5. The method for producing the silica particle according to claim 3 or 4, comprising surface treating with use of a silane coupling agent and/or a silane compound.

6. The method for producing the silica particle according to claim 5, wherein the surface treating is proceeded by means of a spray drying.

7. A resin composition containing the silica particle according to claim 1 or 2 and a resin.

Fig. 1

**Relationship between the true specific gravity and the water-absorbing rate**

Fig. 2

<table>
<tr><td colspan="2" align="center">**INTERNATIONAL SEARCH REPORT**</td><td colspan="2">International application No.<br>PCT/JP2011/050491</td></tr>
</table>

A. CLASSIFICATION OF SUBJECT MATTER
*C01B33/18*(2006.01)i, *C08K9/06*(2006.01)i, *C08L101/00*(2006.01)i

According to International Patent Classification (IPC) or to both national classification and IPC

B. FIELDS SEARCHED

Minimum documentation searched (classification system followed by classification symbols)
C01B33/18, C08K9/06, C08L101/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)
JSTPlus(JDreamII)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2003-176121 A  (Nippon Shokubai Co., Ltd.),<br>24 June 2003 (24.06.2003),<br>claims 1 to 3, 8; paragraphs [0029] to [0031],<br>[0042], [0046] to [0047], [0075], [0083] to<br>[0087], [0105], [0110] to [0111]<br>& US 2003/0069347 A1    & TW 576822 B<br>& KR 10-2003-0027816 A   & CN 1408642 A | 1,3,4,7<br>2,5,6 |
| X<br>Y | JP 2008-137854 A  (Nippon Shokubai Co., Ltd.),<br>19 June 2008 (19.06.2008),<br>claims 1, 5, 7; paragraphs [0015], [0028],<br>[0032], [0033], [0050] to [0051]; examples 1<br>to 4<br>(Family: none) | 1-7<br>2,5,6 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>25 February, 2011 (25.02.11) | Date of mailing of the international search report<br>08 March, 2011 (08.03.11) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2011/050491 |

C (Continuation).   DOCUMENTS CONSIDERED TO BE RELEVANT

| Category* | Citation of document, with indication, where appropriate, of the relevant passages | Relevant to claim No. |
| --- | --- | --- |
| X<br>Y | JP 10-287415 A  (Kabushiki Kaisha Shiaru),<br>27 October 1998 (27.10.1998),<br>claim 1; paragraphs [0023], [0028] to [0029]<br>(Family: none) | 1,7<br>2 |
| Y | JP 2002-182409 A  (Mitsubishi Chemical Corp.),<br>26 June 2002 (26.06.2002),<br>claim 3; paragraphs [0017] to [0018]<br>(Family: none) | 2,5,6 |
| A | JP 2009-215088 A  (Nihon Yamamura Glass Co.,<br>Ltd.),<br>24 September 2009 (24.09.2009),<br>paragraphs [0028] to [0029], [0031] to [0032],<br>[0042]<br>(Family: none) | 1-7 |
| A | JP 6-254383 A  (Tokuyama Corp.),<br>13 September 1994 (13.09.1994),<br>paragraph [0031]<br>(Family: none) | 1-7 |

Form PCT/ISA/210 (continuation of second sheet) (July 2009)

**INTERNATIONAL SEARCH REPORT**

| International application No. |
| --- |
| PCT/JP2011/050491 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
    The invention in claim 1 cannot be considered to be novel in the light of the invention described in the document 1, and does not have a special technical feature. Consequently, the invention in claim 1 does not comply with the requirement of unity.
    The inventions in claims 1, 2, 7 are relevant to main invention.

    Document 1: JP 2003-176121 A (Nippon Shokubai Co., Ltd.), 24 June 2003 (24.06.2003)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI431311 B
- JP SHO63265806 B
- JP 2003277044 A
- JP 2008285406 A
- JP 2003277025 A
- JP 2003165718 A
- JP HEI9208809 B
- JP 2002338230 A